# FASCICULE DE BREVET EUROPEEN

(11) **EP 3 191 358 B1**
(45) Date de publication et mention de la délivrance du brevet: **03.10.2018**
(21) Numéro de dépôt: 15759889.7
(22) Date de dépôt: 05.08.2015
(51) Int. Cl.: B62D 25/02, B62D 25/08

(54) **PARTIE ARRIÈRE DE LA CAISSE D'UN VÉHICULE AUTOMOBILE DONT LE LOGEMENT DE FEU ARRIÈRE EST SOUTENU PAR UNE ENTRETOISE**
HINTERER TEIL DER KAROSSERIE EINES KRAFTFAHRZEUGS MIT STÜTZE DES HINTEREN SCHEINWERFERGEHÄUSES DURCH EINEN ABSTANDSHALTER
REAR PORTION OF THE BODY OF A MOTOR VEHICLE IN WHICH THE REAR LIGHT HOUSING IS SUPPORTED BY A SPACER

(30) Priorité: 09.09.2014 FR 1458450
(43) Date de publication de la demande: 19.07.2017
(73) Titulaire: PSA Automobiles SA, 78300 Poissy (FR)
(72) Inventeur: DESPLANCHES, Patrice, F-78100 St Germain en Laye (FR); LEFEVRE, Eric, F-91470 Limours (FR)
(74) Mandataire: Fosse, Danièle
(86) Numéro de dépôt international: PCT/FR2015/052160
(87) Numéro de publication internationale: WO 2016/038262

(56) Documents cités:
- WO-A1-2013/080965
- FR-A1- 2 918 014
- JP-A- 2012 096 718

## Description

La présente invention concerne une partie arrière de la caisse d'un véhicule automobile comportant une pièce en tôle emboutie constituant un logement pour l'un des deux feux arrière, située à proximité de la doublure de l'une des deux ailes arrières, de la doublure de custode et de l'un des deux passages de roue arrière.

L'invention concerne également un véhicule automobile dont la caisse comporte, de chaque côté, une partie arrière selon l'invention.

Le document WO 2013/080965 A1 décrit une partie arrière de la caisse d'un véhicule automobile selon le préambule de la revendication 1.

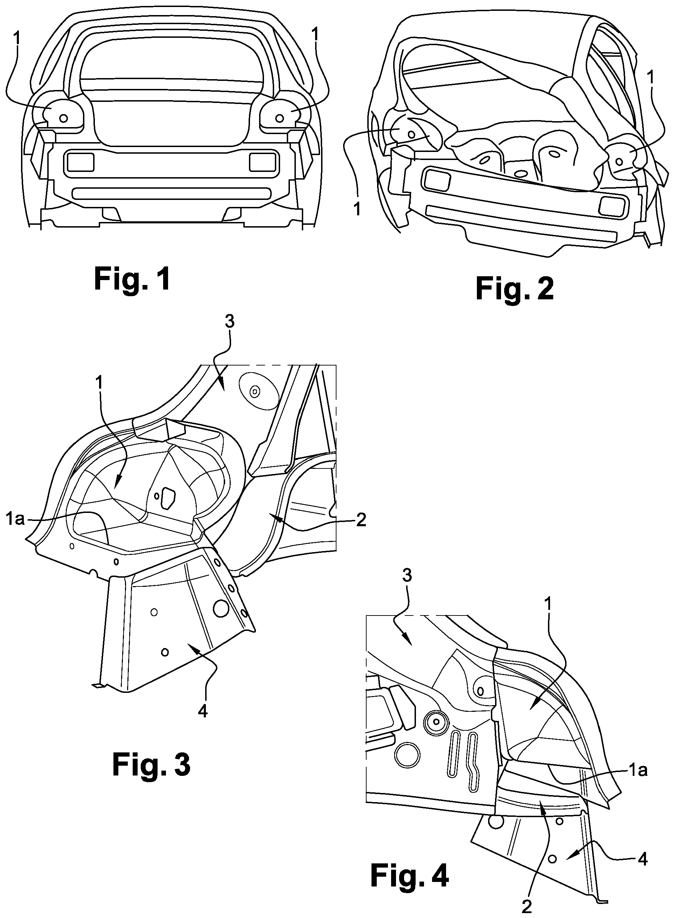

La caisse d'un tel véhicule est représentée sur la figure 1.

L'arrière de cette caisse comporte notamment de chaque côté un logement de feu arrière 1.

Le but de la présente invention est d'améliorer la raideur de la caisse, en particulier la résistance à la torsion, dans la zone des deux logements de feu arrière pour satisfaire aux nouvelles prescriptions.

On veut en effet éviter l'affaissement de la caisse lorsque celle-ci est soumise à des efforts de torsion, comme montré sur la figure 2.

Les figures 3 et 4 sont des vues en perspective montrant une partie arrière de la caisse d'un véhicule automobile connu.

Cette partie arrière de la caisse comprend une pièce en tôle emboutie constituant un logement pour l'un des deux feux arrière.

Ce logement 1 est situé à proximité de la doublure de l'aile arrière 2, de la doublure de custode 3 et du passage de roue.

La figure 3 notamment montre que la tôle du logement de feu arrière 1 comprend une paroi inférieure 1a qui est située sensiblement dans un plan horizontal.

Le bord 1b de cette paroi 1a dirigé vers l'extérieur du véhicule est fixé par soudure à une partie rigide 4 de la caisse qui est située sensiblement dans un plan vertical.

Les essais effectués par la demanderesse ont révélé qu'il fallait améliorer la raideur de la caisse dans la zone montrée sur les figures 3 et 4.

Le but de la présente invention est précisément d'atteindre cet objectif.

Ce but est atteint, selon l'invention, grâce à une partie arrière de la caisse d'un véhicule automobile comportant une pièce en tôle emboutie constituant un logement pour l'un des deux feux arrière, située à proximité de la doublure de l'une des deux ailes arrières, de la doublure de custode et de l'un des deux passages de roue arrière, ladite pièce en tôle du logement de feu arrière comprenant une paroi située sensiblement dans un plan horizontal qui comporte un bord qui est fixé à une partie rigide de la caisse située sensiblement dans un plan vertical, caractérisée en ce que ladite paroi du logement de feu arrière est soutenue par une pièce en tôle formant entretoise dont le bord inférieur est fixé à l'un des passages de roue et le bord supérieur est fixé sous ladite paroi du logement de feu.

Cette pièce en tôle formant entretoise fixée entre le passage de roue et la paroi du logement de feu arrière constitue un moyen simple et peu coûteux pour augmenter la raideur de la zone évoquée plus haut.

Dans une version préférée de l'invention, ladite pièce en tôle formant entretoise est sensiblement parallèle à ladite partie rigide de la caisse.

Cette disposition de la pièce en tôle formant entretoise permet d'obtenir la raideur optimale dans la zone ci-dessus.

De préférence également, la paroi du logement de feu arrière comprend près dudit bord de cette paroi une zone emboutie comportant un épaulement sensiblement vertical, le bord supérieur de ladite pièce en tôle formant entretoise étant soudé contre la face intérieure de l'épaulement de ladite zone emboutie.

L'épaulement ci-dessus permet d'obtenir un plan d'accostage dans le plan des directions Z (verticale) et X (longitudinale) du véhicule, optimal par rapport aux règles de ferrage.

Le fait de réaliser cet épaulement lors de l'emboutissage permet d'obtenir le plan d'accostage ci-dessus avec un coût négligeable.

Dans un mode de réalisation avantageux de l'invention, le bord inférieur de la pièce formant entretoise est soudé contre un bord tombé de la tôle dudit passage de roue.

Selon d'autres particularités avantageuses de l'invention :
- le bord avant de la pièce formant entretoise est soudé contre le bord adjacent de la doublure d'aile ;
- ladite pièce formant entretoise comporte des nervures de renforcement embouties s'étendant dans le sens de la hauteur de ladite pièce.

Selon un autre aspect, l'invention concerne également un véhicule automobile dont la caisse comporte, de chaque côté, une partie arrière selon l'invention.

D'autres particularités et avantages de l'invention apparaîtront encore tout au long de la description ci-après.

Aux dessins annexés, donnés à titre d'exemples, non limitatifs :
- la figure 5 est une vue analogue à la figure 3 montrant la modification effectuée selon l'invention sur la paroi du logement de feu arrière,
- la figure 6 est une vue suivant la flèche D de la figure 5 montrant également le passage de roue,
- la figure 7 est une vue analogue à la figure 6, à échelle agrandie, montrant la pièce formant entretoise en position sous le logement de feu arrière,
- la figure 8 est une vue en coupe suivant le plan A-A de la figure 7.

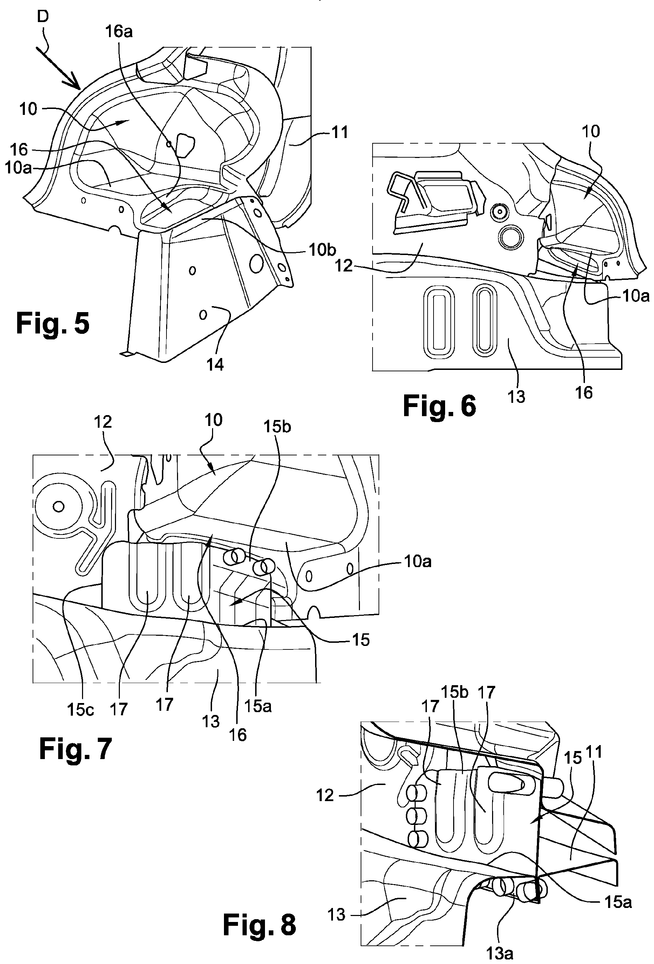

Les figures 5 à 8 représentent une partie arrière de la caisse d'un véhicule automobile modifiée selon l'invention.

Cette partie arrière comporte une pièce en tôle emboutie constituant un logement 10 pour l'un des deux feux arrière, située à proximité de la doublure 11 de l'une des deux ailes arrières, de la doublure de custode 12 et de l'un des deux passages de roue arrière 13.

La pièce en tôle du logement 10 de feu arrière comprend une paroi inférieure 10a située sensiblement dans un plan horizontal qui comporte un bord 10b qui est fixé à une partie rigide 14 de la caisse située sensiblement dans un plan vertical.

Conformément à l'invention, la paroi 10a du logement de feu arrière 10 est soutenue (voir figures 7 et 8) par une pièce en tôle 15 formant entretoise dont le bord inférieur 15a est fixé sur l'un des passages de roue 13 et le bord supérieur 15b est fixé sous la paroi 10a du logement de feu 10.

Les figures 7 et 8 montrent que la pièce en tôle 15 formant entretoise est une cloison qui est sensiblement parallèle la partie rigide 14 de la caisse.

Les figures 5 à 8 montrent en outre que la paroi inférieure 10a du logement de feu arrière 10 comprend près du bord 10a de cette paroi 10a, une zone emboutie 16 comportant un épaulement 16a sensiblement vertical.

Comme montré par les figures 7 et 8, le bord supérieur 15b de la pièce en tôle 15 formant entretoise est soudé contre la face intérieure de l'épaulement 16a de la zone emboutie 16.

Par ailleurs, le bord inférieur 15a de la pièce 15 formant entretoise est soudé (voir figure 8) contre un bord tombé 13a de la tôle du passage de roue 13.

De plus, les figures 7 et 8 montrent que le bord avant 15c de la pièce 15 formant entretoise est soudé contre le bord adjacent de la doublure d'aile 12.

La figure 8 montre également que le bord inférieur 15a de la pièce 15 est soudé à un bord tombé de la doublure 11 de l'aile arrière.

Les différentes soudures réalisées entre la pièce 15 et les autres pièces sont représentées par des cercles visibles sur les figures 7 et 8.

Ainsi, la pièce 15 est soudée à cinq pièces différentes, ce qui permet à cette pièce 15 de supporter efficacement la paroi inférieure 15a du logement de feu 10.

Les figures 7 et 8 montrent en outre que la pièce 15 formant entretoise comporte deux nervures 17 de renforcement embouties s'étendant dans le sens de la hauteur de la pièce 15.

Ces nervures 17 augmentent la raideur de la pièce 15 c'est-à-dire l'aptitude de cette dernière à supporter les efforts de torsion.

Les principaux avantages de l'invention que l'on vient de décrire sont les suivants :
- la zone emboutie 16 réalisée sur la paroi inférieure 10a du logement de feu arrière 10 ainsi que la cloison 15 formant entretoise entre le passage de roue et le logement de feu 10 permet d'obtenir une amélioration importante de la résistance à la torsion de la caisse,
- les modifications effectuées par l'invention permettent de conserver c'est-à-dire maintenir les pièces de base de la partie arrière de la caisse, telles que les passages de roue 13,
- ces modifications respectent les règles préconisées dans le domaine du ferrage.

## Revendications

1. Partie arrière de la caisse d'un véhicule automobile comportant une pièce en tôle emboutie constituant un logement (10) pour l'un des deux feux arrière, située à proximité de la doublure (11) de l'une des deux ailes arrières, de la doublure de custode (12) et de l'un des deux passages de roue arrière (13), ladite pièce en tôle du logement (10) de feu arrière comprenant une paroi (10a) située sensiblement dans un plan horizontal qui comporte un bord (10b) qui est fixé à une partie rigide (14) de la caisse située sensiblement dans un plan vertical, **caractérisée en ce que** ladite paroi (10a) du logement (10) de feu arrière est soutenue par une pièce en tôle (15) formant entretoise dont le bord inférieur est fixé à l'un des passages de roue (13) et le bord supérieur est fixé sous ladite paroi (10a) du logement de feu (10).

2. Partie arrière de la caisse selon la revendication 1, **caractérisée en ce que** ladite pièce en tôle (15) formant entretoise est sensiblement parallèle à ladite partie rigide (14) de la caisse.

3. Partie arrière de la caisse selon l'une des revendications 1 ou 2, **caractérisée en ce que** ladite paroi (10a) du logement (10) de feu arrière comprend près dudit bord (10b) de cette paroi (10a) une zone emboutie (16) comportant un épaulement (16a) sensiblement vertical, le bord supérieur (15b) de ladite pièce en tôle (15) formant entretoise étant soudé contre la face intérieure de l'épaulement (16a) de ladite zone emboutie (16).

4. Partie arrière de la caisse selon l'une des revendications 1 à 3, **caractérisée en ce que** le bord inférieur (15b) de la pièce (15) formant entretoise est soudé contre un bord tombé (13a) de la tôle dudit passage de roue (13).

5. Partie arrière de la caisse selon l'une des revendications 1 à 4, **caractérisée en ce que** le bord avant (15c) de la pièce (15) formant entretoise est soudé contre le bord adjacent de la doublure d'aile (12).

6. Partie arrière de la caisse selon l'une des revendications 1 à 5, **caractérisée en ce que** ladite pièce (15) formant entretoise comporte des nervures (17) de renforcement embouties s'étendant dans le sens de la hauteur de ladite pièce (15).

7. Véhicule automobile dont la caisse comporte, de chaque côté, une partie arrière de caisse selon l'une des revendications 1 à 6.

## Patentansprüche

1. Hinterer Teil der Karosserie eines Kraftfahrzeugs, der ein gestanztes Blechteil umfasst, das ein Gehäuse (10) für einen der zwei hinteren Scheinwerfer bildet, das in der Nähe der Auskleidung (11) eines der zwei Heckflügel, der Auskleidung des Karosserieteils über dem Hinterrad (12) und einem der zwei Hinterradradläufe (13) liegt, wobei das Blechteil des Gehäuses (10) des hinteren Scheinwerfers eine Wand (10a) umfasst, die im Wesentlichen in einer horizontalen Ebene liegt, die einen Rand (10b) umfasst, der an einem starren Teil (14) der Karosserie befestigt ist, der im Wesentlichen in einer vertikalen Ebene liegt, **dadurch gekennzeichnet, dass** die Wand (10a) des Gehäuses (10) des hinteren Scheinwerfers von einem Blechteil (15) gestützt ist, das einen Abstandshalter bildet, dessen unterer Rand an einem der Radläufe (13) befestigt ist, und dessen oberer Rand unter der Wand (10a) des Scheinwerfergehäuses (10) befestigt ist.

2. Hinterer Teil der Karosserie nach Anspruch 1, **dadurch gekennzeichnet, dass** das Blechteil (15), das einen Abstandshalter bildet, im Wesentlichen zu dem starren Teil (14) der Karosserie parallel ist.

3. Hinterer Teil der Karosserie nach einem der Ansprüche 1 oder 2, **dadurch gekennzeichnet, dass** die Wand (10a) des Heckscheinwerfergehäuses (10) nahe dem Rand (10b) dieser Wand (10a) eine gestanzte Zone (16) umfasst, die einen Ansatz (16a), der im Wesentlichen vertikal ist, umfasst, wobei der obere Rand (15b) des Blechteils (15), das den Abstandshalter bildet, gegen die Innenfläche des Ansatzes (16a) der gestanzten Zone (16) geschweißt ist.

4. Hinterer Teil der Karosserie nach einem der Ansprüche 1 bis 3, **dadurch gekennzeichnet, dass** der untere Rand (15b) des Teils (15), das einen Abstandshalter bildet, gegen eine Bördelung (13a) des Blechs des Radlaufs (13) geschweißt ist.

5. Hinterer Teil der Karosserie nach einem der Ansprüche 1 bis 4, **dadurch gekennzeichnet, dass** der vordere Rand (15c) des Teils (15), das einen Abstandshalter bildet, gegen den Rand benachbart zu der Flügelauskleidung (12) geschweißt ist.

6. Hinterer Teil der Karosserie nach einem der Ansprüche 1 bis 5, **dadurch gekennzeichnet, dass** das Teil (15), das einen Abstandshalter bildet, gestanzte Verstärkungsrippen (17) umfasst, die sich in die Richtung der Höhe des Teils (15) erstrecken.

7. Kraftfahrzeug, dessen Karosserie auf jeder Seite einen hinteren Karosserieteil nach einem der Ansprüche 1 bis 6 umfasst.

## Claims

1. A rear portion of the body of a motor vehicle comprising a part made of stamped sheet metal constituting a housing (10) for one of the two rear lights, situated in the proximity of the lining (11) of one of the two rear wings, to the quarter panel lining (12) and to one of the two rear wheel arches (13), said sheet metal part of the rear light housing (10) including a wall (10a) situated substantially in a horizontal plane which comprises an edge (10b) which is fixed to a rigid portion (14) of the body situated substantially in a vertical plane, **characterized in that** said wall (10a) of the rear light housing (10) is supported by a sheet metal part (15) forming a spacer, the lower edge of which is fixed to one of the wheel arches (13) and the upper edge of which is fixed beneath said wall (10a) of the light housing (10).

2. The rear part of the body according to claim 1, **characterized in that** said sheet metal part (15) forming a spacer is substantially parallel to said rigid portion (14) of the body.

3. The rear part of the body according to one of claims 1 or 2, **characterized in that** said wall (10a) of the rear light housing (10) includes close to said edge (10b) of this wall (10a) a stamped zone (16) comprising a substantially vertical shoulder (18a), the upper edge (15b) of said sheet metal part (15) forming a spacer being welded against the interior face of the shoulder (16a) of said stamped zone (16).

4. The rear part of the body according to one of claims 1 to 3, **characterized in that** the lower edge (15b) of the part (15) forming a spacer is welded against a flange (13a) of the metal sheet of said wheel arch (13) .

5. The rear part of the body according to one of claims 1 to 4, **characterized in that** the front edge (15c) of the part (15) forming a spacer is welded against the adjacent edge of the wing lining (12).

6. The rear part of the body according to one of claims 1 to 5, **characterized in that** said part (15) forming a spacer comprises stamped reinforcement ribs (17) extending in the vertical direction of said part (15).

7. A motor vehicle, the body of which comprises, on each side, a rear part of the body according to one of claims 1 to 6.
